Europäisches Patentamt

(19) European Patent Office

Office européen des brevets

(11) Numéro de publication: **0 025 405**

**A1**

(12) **DEMANDE DE BREVET EUROPEEN**

(21) Numéro de dépôt: **80430011.9**

(22) Date de dépôt: **19.05.80**

(51) Int. Cl.³: **G 03 B 27/32**
**G 03 B 27/62**

(30) Priorité: **21.05.79 FR 7912853**

(43) Date de publication de la demande:
**18.03.81 Bulletin 81/11**

(84) Etats Contractants Désignés:
**AT BE CH DE GB IT LI LU NL SE**

(71) Demandeur: **INFOMAIN**
**Le Nogier Du Rigaudel Saint Andeol De Vals**
**F-07600 Vals Les Bains(FR)**

(72) Inventeur: **Hallé, Jean François**
**Le Nogier**
**07600 Vals les Bains(FR)**

(54) Dispositifs de microfilmage.

(57) Géométrie d'un matériel de prise de vue pour microfilmage de dessins techniques permettant de simplifier la construction, le règlage et la mise en oeuvre de ce matériel.

Les dimensions de la table d'exposition rectangulaire des documents à microfilmer rentrent dans la série A de raison $\sqrt{2}$. Le plan de l'axe optique de l'appareil de prise de vue - perpendiculaire à cette table - contient une diagonale de la table d'exposition. Cette disposition permet de cadrer facilement les documents à microfilmer, de déterminer sans ambiguïté le taux de réduction à appliquer lors du microfilmage, d'inclure systématiquement dans le champ object un compteur de prise de vue et une règle donnant l'"échelle.

L'invention peut être utilisée pour construire des appareils de prise de vue d'encombrement et de poids qui autorisent le microfilmage sur le lieu d'archivage.

- I -

Dispositif de microfilmage

La présente invention concerne les appareils de prise de vue pour le microfilmage de documents de format supérieur ou égal au format A 3.

Dans les dispositifs actuels de prise de vue, le centre optique de l'appareil de prise de vue se déplace sur une perpendiculaire au plan d'exposition passant par le centre de la table d'exposition rectangulaire, ou sur une ligne oblique passant par ce même centre et contenue dans le plan perpendiculaire à la table en son centre et parallèle aux petits côtés de la table d'exposition. Ces dispositifs ont l'inconvénient de nécessiter de la part de l'opérateur de prise de vue une attention soutenue pour cadrer les documents à microfilmer et déterminer le taux de réduction. Ces dispositifs ont aussi l'inconvénient de nécessiter une construction mécanique lourde du fait de l'existence d'un bras horizontal (support de l'appareil de prise de vue) créant un couple important sur le banc vertical ou incliné de déplacement de ce bras.

Le dispositif objet de l'invention permet d'éviter ces inconvénients Dans celui-ci, en effet, il est possible de cadrer à coup sûr et de déterminer sans ambiguïté le rapport de réduction à adopter compte tenu du format du document à microfilmer.

Dans le dispositif objet de l'invention, le lieu géométrique du centre optique de l'objectif de prise de vue est situé dans le plan P perpendiculaire à la table d'exposition contenant l'une des deux diagonales du champ objet, lequel est un rectangle dont longueur et largeur sont dans le rapport $\sqrt{2}$. Le lieu géométrique du centre optique contient l'un des sommets de ce rectangle. C'est une droite dont l'inclinaison par rapport à la table d'exposition est définie par l'angle de champ de l'objectif de l'appareil de prise de vue. Dans une réalisation de l'invention, le réglage précis de cet angle de champ est obtenu par rotation du bras-support de l'appareil de prise de vue dans le plan P.

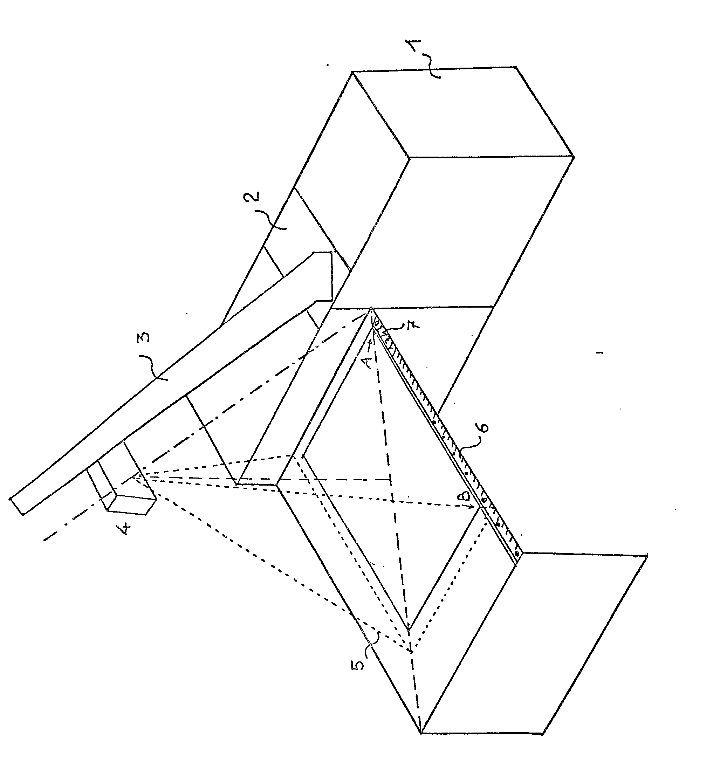

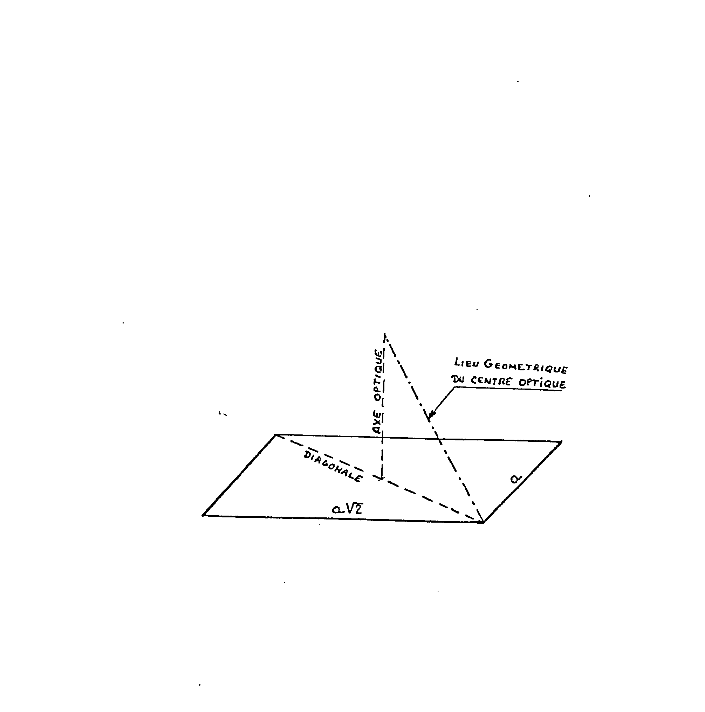

Le dessin annexé illustre, à titre d'exemple, un mode de réalisation du dispositif conforme à la présente invention.

Tel qu'il est représenté, le dispositif comporte un bloc d'appui (I) de la sole (2) du bras (3) support de l'appareil (4) de prise de vue Une table d'exposition (5) comporte un bloc de commande (6) et un compteur de vues (7) situé dans le champ de l'objectif.

Quand on veut microfilmer un document, on le place sur la table d'exposition toujours dans le même angle A, la longueur du document étant parallèle à la grande dimension de la table. Si les dimensions du document sont issues de la série normalisée A, le bouton de cadrage de l'appareil de prise de vue sera placé à l'applomb de l'extrémité B du document. S'il en est autrement, le bouton de cadrage à actionner sera celui qui encadre au plus près le format qu'aurait le document si on augmentait l'une des dimensions pour étendre le format à un dérivé de la série A.

Le dispositif objet de l'invention peut être utilisé pour construire un appareil de microfilmage plus facile à mettre en oeuvre que les appareils actuels, et plus performant puisqu'il permet de microfilmer un numéro de vue en même temps que le document - lequel numéro permettra par la suite de situer très rapidement la vue recherchée soit sur bobine soit sur carte à fenêtre -. La construction de la partie qui assure le positionnement de l'appareil de prise de vue peut être plus légère que sur les appareils actuels et, de ce fait, permet de réaliser un appareil réellement transportable.

Revendications de brevet

I. Dispositif permettant de cadrer et de maintenir en place facilement un document à microfilmer caractérisé par le fait que l'opérateur -installé devant le grand côté d'une table d'exposition rectangulaire dont longueur et largeur sont dans le rapport $\sqrt{2}$- positionne systématiquement le document dans l'angle droit de la table, proche de l'opérateur, en prenant soin de placer la plus grande dimension dudocument parallèlement à la longueur de la table.

2. Dispositif selon revendication I, caractérisé par le fait que l'opérateur plaque le document sur la table d'exposition au moyen de deux tasseaux articulés sur les deux côtés de l'angle droit de la table.

3. Dispositif selon revendication I, caractérisé par le fait que l'opérateur plaque le document sur la table d'exposition au moyen d'une aspiration modulée en fonction du format du document à microfilmer, la surface à aspirer étant sélectionnée en même temps que le format.

4. Dispositif selon revendication I, caractérisé par le fait que le rapport de réduction, et par conséquence le positionnement de l'appareil de prise de vue est donné par la manoeuvre du bouton de cadrage situé sur le bloc de commande juste à gauche du côté gauche du document à microfilmer, ou à gauche du côté gauche fictif qu'aurait ce document s'il respectait la série normalisée de dimensions dite "série A" matérialisée sur la table d'exposition par la diagonale commune à tous les formats de la série A lorsqu'ils se déduisent les uns les autres par homothétie depuis l'angle de cadrage sur la table.

5. Dispositif selon revendication I, caractérisé par le fait qu'un compteur de vues est placé dans l'angle droit de la table juste au dessous du document, que toute valeur peut y être affichée, mais que cette valeur s'incrémente de une unité à chaque prise de vue sauf pour les documents nécessitant plusieurs prises de vue succéssives compte tenu de leur longueur ou largeur.

6. Dispositif selon revendication I,

caractérisé par le fait qu'une fente permet de présenter sur la table d'exposition des documents de grande longueur ou largeur sans masquer le compteur de vues.

7. Dispositif selon revendication I, caractérisé par le fait que l'inclinaison vers le centre de la table du lieu géométrique du centre optique de l'appareil de prise de vue supprime la nécessité du bras horizontal et permet de construire un ensemble léger pour supporter l'appareil de prise de vue et l'éclairage électronique, le tout prenant appui sur un cadre rigide solidaire de la table d'exposition.

8. Dispositif selon revendication 5, caractérisé par le fait que l'affichage du compteur de vues est répété sur le film à côté de l'image du document ainsi que le rapport de réduction et le folio (cas de microfilmage de plan de grande dimension) permettant ainsi une identification rapide de la vue microfilmée lors d'une exploitation par lecteur motorisé.

9. Dispositif selon revendication 7, Caractérisé par le fait que le réglage de la mise au point de l' objectif est assuré par un motoréducteur asservi au réglage du cadrage.

I0. Dispositif selon revendication 7, caractérisé par le fait que le bloc d'appui du bras-support de l' appareil de prise de vue assure les fonctions de meuble de rangement pour la table d'exposition, le bras-support de l'appareil de prise de vues, l'appareil lui-même, le système d'éclairage électronique par réflexion, le bloc de commande, le compteur de prise de vues, l'électronique de bord et le petit outillage de l'opérateur.

**Office européen des brevets**

**RAPPORT DE RECHERCHE EUROPEENNE**

## DOCUMENTS CONSIDERES COMME PERTINENTS

| Catégorie | Citation du document avec indication, en cas de besoin, des parties pertinentes | Revendication concernée |
|---|---|---|
| X | FR - A - 1 112 528 (M.P. LACHAIZE) <br> * Page 1, colonne de gauche; figure 4 * | 1,7 |
| | -- | |
| | US - A - 2 741 945 (A. BROMS) <br> * Colonne 6, lignes 34-40; figures 2,5 * | 1,2,7 |
| | -- | |
| | US - A - 2 882 790 (A. BROMS) <br> * Colonne 3, lignes 18-31; figures* | 1,5,7, 8 |
| | -- | |
| | GB - A - 674 341 (POWERS PHOTO ENGRAVING CO.) <br> * Page 2, lignes 55-65; figure 2 * | 2 |
| | -- | |
| | FR - A - 1 139 014 (R.L. BERNARD) <br> * Figure 1 * | 3 |
| | -- | |
| | FR - A - 1 575 693 (G.B. DE FOUQUIERES et al.) <br> * Pages 4 et 5 * | 3 |
| | -- | |
| | DE - A - 2 245 609 (ELBE-KAMERA) <br> * Revendication 1; figure 1 * | 4,9 |
| | -- | |
| | ./.. | |

**CLASSEMENT DE LA DEMANDE (Int. Cl. 3)**

G 03 B 27/32
27/62

**DOMAINES TECHNIQUES RECHERCHES (Int. Cl. 3)**

G 03 B 27/32
27/34
27/62
27/64

**CATEGORIE DES DOCUMENTS CITES**

X: particulièrement pertinent

A: arrière-plan technologique

O: divulgation non-écrite

P: document intercalaire

T: théorie ou principe à la base de l'invention

E: demande faisant interférence

D: document cité dans la demande

L: document cité pour d'autres raisons

&: membre de la même famille, document correspondant

Le présent rapport de recherche a été établi pour toutes les revendications

| Lieu de la recherche | Date d'achèvement de la recherche | Examinateur |
|---|---|---|
| La Haye | 21.08.1980 | HILTNER |

OEB Form 1503.1  06.78

**Office européen des brevets**

## RAPPORT DE RECHERCHE EUROPEENNE

| DOCUMENTS CONSIDERES COMME PERTINENTS | | | CLASSEMENT DE LA DEMANDE (Int. Cl. 3) |
|---|---|---|---|
| Catégorie | Citation du document avec indication, en cas de besoin, des parties pertinentes | Revendication concernée | |
| | FR - A - 2 120 632 (VEB PENTACON DRESDEN) <br><br> * Revendication 1 * <br><br> ---- | 4,9 | |
| | | | **DOMAINES TECHNIQUES RECHERCHES (Int. Cl. 3)** |

OEB Form 1503.2   06.78